# EUROPÄISCHE PATENTSCHRIFT

(11) **EP 2 466 552 B1**
(45) Veröffentlichungstag und Bekanntmachung des Hinweises auf die Patenterteilung: **25.07.2018**
(21) Anmeldenummer: 11191192.1
(22) Anmeldetag: 29.11.2011
(51) Int. Cl.: G07C 7/00, H01Q 1/24, H01Q 9/04

(54) **Bordinformationssystem mit Mobilfunkantenne**
On-board information system with mobile radio antenna
Système d'information à bord doté d'une antenne mobile

(30) Priorität: 20.12.2010 DE 102010055206
(43) Veröffentlichungstag der Anmeldung: 20.06.2012
(73) Patentinhaber: Continental Automotive GmbH, 30165 Hannover (DE)
(72) Erfinder: Peulecke, Jens, 78048 Villingen-Schwenningen (DE); Wahler, Torsten, 78073 Bad Dürrheim (DE)

(56) Entgegenhaltungen:
- EP-A1- 0 604 338
- DE-A1-102009 005 045
- DE-U1- 20 108 778
- US-A1- 2003 107 521
- US-A1- 2005 057 904
- US-A1- 2006 017 646
- "Richtlinie 2004/52/ EG des Europäischen Parlaments und des Rates vom 29. April 2004 über die Interoperabilität elektronischer Mautsysteme in der Gemeinschaft", , 7 June 2004 (2004-06-07), pages 1-8, XP055261416, Retrieved from the Internet: URL:https://www.asfinag.at/documents/10180 /46236/de_EETS_Richtline.pdf/4833a0fb-7727 -4ed8-b689-f13a269b086d [retrieved on 2016-03-30]

## Beschreibung

Die vorliegende Erfindung betrifft ein Bordinformationssystem mit einer Mobilfunkantenne zur Erfassung mindestens einer fahrzeugrelevanten Größe.

Bordinformationssysteme, insbesondere Tachographen, Mauterfassungsgeräte oder sogenannte Universal Onboard Units, die die Funktionen von Tachographen und Mauterfassungsgeräten kombinieren, müssen immer höhere technische Anforderungen erfüllen. Insbesondere die Kopplung eines derartigen Geräts mit einer Vorrichtung zum Empfang von Mobilfunk bietet hier neue Anwendungsmöglichkeiten, die eine verbesserte Kommunikation zwischen einem in einem Fahrzeug, beispielsweise einem Lastkraftwagen, verbauten Bordinformationssystem und verschiedenen Sendern bzw. Empfängern erlauben.

Aus dem Stand der Technik sind bereits derartige Vorrichtungen bekannt. So offenbart beispielsweise die Druckschrift EP 1 538 572 A2 ein Erfassungsgerät für Straßenbenutzungsgebühren, bei dem das Erfassungsgerät in das Gehäuse eines digitalen Tachographen eingesetzt werden kann und über ein Mobilfunkmodul Daten an einen externen Empfänger übertragen kann. Nachteilig am bisher bekannten Stand der Technik ist jedoch, dass ein Mobilfunkempfänger zwar in ein Gehäuse eines Bordinformationssystems integriert sein kann, eine Mobilfunkantenne jedoch in der Regel außerhalb des Gehäuses an einer anderen Position des Fahrzeugs angebracht wird, um einen ausreichend starken Empfang zu gewährleisten. Elektrisch leitfähige Teile des Gehäuses können die Mobilfunkantenne beim Empfangen und Senden derart beeinflussen, dass die Signalstärke an der Mobilfunkantenne zu niedrig ist. Eine Anbringung der Mobilfunkantenne außerhalb des Gehäuses ist allerdings ebenfalls nachteilig, da hiermit neben einer Befestigung der Mobilfunkantenne eine zusätzliche drahtgebundene oder drahtlose Verbindung zwischen Mobilfunkantenne und dem im Gehäuse des Bordinformationssystems untergebrachten Mobilfunkmodul hergestellt werden muss. Um eine Mobilfunkantenne in einen Innenraum eines Fahrzeugs einzubauen, darf die Mobilfunkantenne keine zu großen Abmessungen aufweisen und muss eine sehr gute Sende- und Empfangsleistung zeigen, welche nicht durch andere Bauteile verringert wird. Aus der Schrift US 2003/0107521 ist ein Bordinformationssystem bekannt, das ein Mauterfassungsgerät ist und in einen Rückspiegel eingebaut ist. Eine oder mehrere Antenneneinheiten dieses Systems sind in einer Ausnehmung des Rückspiegelfußes platziert.

Aus der Schrift US 2006/0017646 ist ein integriertes Antennensystem für Fahrzeuge bekannt, das eine ETC-Antenneneinheit, eine GPS-Antenneneinheit und zwei PIFA-Antenneneinheiten für Mobilfunk aufweist.

Aus der Schrift DE 10 2009 005 045 ist eine Patchantenne bekannt, wobei die Strahlerfläche der Antenne und der Antennenreflektor einen Abstand von mindestens 50% der Gesamthöhe der Patchantenne aufweisen.

Der vorliegenden Erfindung liegt damit die Aufgabe zugrunde, ein Bordinformationssystem zu entwickeln, welches die genannten Nachteile vermeidet.

Diese Aufgabe wird erfindungsgemäß gelöst durch ein Bordinformationssystem mit den Merkmalen des Hauptanspruchs. Vorteilhafte Ausgestaltungen und Weiterentwicklungen der Erfindung ergeben sich mit den Merkmalen der Unteransprüche.

Ein erfindungsgemäßes Bordinformationssystem, welches zur Erfassung mindestens einer fahrzeugrelevanten Größe ausgebildet ist, umfasst ein in einen Fahrzeuginnenraum einbaubares Gehäuse, ein Mobilfunk-Modul und eine Mobilfunkantenne, wobei die Mobilfunkantenne in einer Ausnehmung des Gehäuses platziert ist. Die strahlende Fläche der Mobilfunkantenne ist hierbei von dem Gehäuse beabstandet.

Die Ausnehmung dient der Aufnahme der Mobilfunkantenne in einer Art und Weise, dass keine Kanten der Mobilfunkantenne herausstehen, sondern ein möglichst bündiger Abschluss mit dem restlichen Gehäuse erreicht wird. Die Mobilfunkantenne ist somit einerseits am Gehäuse des Bordinformationssystems positioniert, sodass sich durch die Platzierung der Mobilfunkantenne in der Ausnehmung des Gehäuses eine kompakte Einheit bildet, die einfach im Fahrzeuginnenraum einzubauen ist. Andererseits wird durch eine Beabstandung einer strahlenden Fläche von dem Gehäuse erreicht, dass die Abstrahl- und Empfangscharakteristik der Mobilfunkantenne gut genug ist, um auch bei einer Verbauung innerhalb des Fahrzeuginnenraums noch ausreichend Leistung zu erbringen.

Gegenüber aus dem Stand der Technik bekannten Bordinformationssystemen bietet eine erfindungsgemäße Lösung den Vorteil, sämtliche zum Empfang von Mobilfunk benötigten Komponenten in einem Gehäuse zu vereinen, sodass die so entstandene Einheit leicht und schnell in Fahrzeuge ein- und ausbaubar ist und bei der die Mobilfunkantenne nicht mehr separat an einer anderen Position des Fahrzeugs positioniert werden muss. Die Erfindung sieht vor, dass ein elektrisch leitender Bestandteil des Gehäuses des Bordinformationssystems und die strahlende Fläche der Mobilfunkantenne einen Abstand von mindestens 50 % einer Gesamthöhe der Mobilfunkantenne aufweisen. In einer besonders vorteilhaften Weiterbildung beträgt der Abstand der strahlenden Fläche der Mobilfunkantenne zu einem elektrisch leitenden Bestandteil mindestens 100 % der Gesamthöhe der Mobilfunkantenne. Durch diesen Abstand von mindestens 50 % der Gesamthöhe der Mobilfunkantenne ist gewährleistet, dass die Mobilfunkantenne noch kompakt mit dem Gehäuse verbaubar ist, da die Abmessungen klein gehalten werden, aber auch ein ausreichender Abstand zu elektrisch leitenden Bestandteilen des Gehäuses besteht, welche die Leistung der Mobilfunkantenne negativ beeinflussen. Die Erfindung sieht ebenfalls vor, dass die Mobilfunkantenne in Form einer PIFA-Antenne, also einer "Planar Inverted F-Shaped Antenna" vorliegt. Eine PIFA-Antenne weist im allgemeinen eine flache Bauform bestehend aus einer strahlenden Fläche und einer im Wesentlichen parallel dazu angeordneten Massefläche, die durch eine Kurzschlussverbindung miteinander verbunden sind, sowie eine Anspeiseleitung für die strahlende Fläche auf. Derartige Antennen weisen eine sehr gute Leistungscharakteristik bei geringen Herstellungs- und Einbaukosten auf, gleichzeitig sind die gängigen Abmessungen einer derartigen Antenne zum Einbau in einen Fahrzeuginnenraum geeignet. Durch die Wahl eines solchen Antennentyps kann eine einfache Platzierung der Mobilfunkantenne in der Ausnehmung erreicht werden, da einerseits die Mobilfunkantenne mit entsprechend geringen Abmessungen gebaut werden kann und andererseits ein Abstand zwischen strahlender Fläche der Mobilfunkantenne und Gehäuse einfach eingestellt werden kann.

Zur Verbesserung der Sende- und Empfangscharakteristik der Mobilfunkantenne ist diese auf einer Außenseite des Gehäuses angebracht sein. Besonders vorteilhaft kann die Mobilfunkantenne direkt mit dem Gehäuse verbunden sein.

Die Ausnehmung zur Aufnahme der Mobilfunkantenne weist dabei in vorteilhafter Weise eine im Wesentlichen geschlossene Oberfläche auf. Hierdurch wird neben einer erhöhten mechanischen Stabilität durch die durchgehende Oberfläche des Gehäuses auch erreicht, dass die Mobilfunkantenne einfach an das Gehäuse montiert werden kann. Alternativ dazu kann auch ein Loch in der Oberfläche des Gehäuses für die Ausnehmung vorgesehen sein.

In besonders vorteilhafter Weise kann die Mobilfunkantenne Abmessungen aufweisen, die kleiner oder gleich Abmessungen der Ausnehmung des Gehäuses sind. Somit kann erreicht werden, dass die Mobilfunkantenne bündig mit dem Gehäuse abschließt, ohne dessen Abmessungen zu beeinträchtigen. Die Erfindung sieht auch vor, dass ein Fuß der Mobilfunkantenne mit einem elektrisch leitfähigen Teil des Gehäuses verbunden ist. Der Fuß der Mobilfunkantenne, der als nicht strahlender Teil der Antenne ausgebildet ist, kann somit sehr gut flächig mit einer elektrischen Masse des Gehäuses verbunden werden und somit kann die Mobilfunkantenne ihre volle Leistung entfalten. Die Auflagefläche des Fußes auf dem Gehäuse und der Fuß selbst können in besonders vorteilhafter Weise ungefähr die gleiche Größe aufweisen, was eine besonders platzsparende Positionierung erlaubt. In diesem Fall ist eine Befestigung der Mobilfunkantenne direkt auf dem Gehäuse vorteilhaft, da somit keine Antennenleistung durch das Gehäuse absorbiert wird. Gemäß Erfindung ist die Mobilfunkantenne auf einer nach einem Einbau dem Fahrzeuginnenraum abgewandten Seite des Gehäuses angebracht. Hierdurch wird an der dem Fahrzeuginnenraum zugewandten Seite des Gehäuses Platz für eine Bedieneinheit geschaffen, während gleichzeitig die Mobilfunkantenne integriert wird.

In besonders vorteilhafter Weise kann das Gehäuse eine Abdeckung aus dielektrischem Material, beispielsweise einen Kunststoff, aufweisen. Hierdurch wird das Gehäuse vor mechanischer Beschädigung geschützt, allerdings gleichzeitig auch durch das dielektrische Material sichergestellt, dass keine Abschirmung durch ein leitfähiges Material vorliegt. Insbesondere die Mobilfunkantenne kann durch eine derartige Abdeckung geschützt werden, ohne die Sende- und Empfangsleistung zu beeinträchtigen. Gleichzeitig kann die Abdeckung dafür sorgen, dass Gehäuse und Abdeckung bündig abschließen und somit eine kompakte Einheit bilden, die ohne Behinderung durch herausstehende Teile oder Kanten einfach eingebaut werden kann.

Eine weitere vorteilhafte Weiterbildung sieht vor, dass das Gehäuse in einen Schacht mit Abmessungen entsprechend einer Norm ISO 7736 einbaubar sein kann. Hierdurch entspricht das Gehäuse einer Normgröße für den Einbau in Konsolen eines Fahrzeugs, beispielsweise in ein Radiofach. Das Gehäuse des Bordinformationssystems ist damit in Modelle verschiedener Hersteller einfach und problemlos einzubauen.

In einer vorteilhaften Weiterbildung ist vorgesehen, dass die Mobilfunkantenne mit einem Kabel verbunden werden kann, insbesondere einem Koaxialkabel, wobei das Kabel durch eine im Fuß der Mobilfunkantenne befindliche Aussparung in das Gehäuse geführt werden kann. Somit kann ohne Veränderung der Antennengeometrie eine zuverlässige Verbindung zwischen der Mobilfunkantenne und weiteren, innerhalb des Gehäuses positionierten Bauteilen geschehen.

In besonders vorteilhafter Weise kann ein Bordinformationssystem mit den genannten Merkmalen in einem Fahrzeug als Tachograph, insbesondere als digitaler Tachograph, und bzw. oder als Mauterfassungsgerät verwendet werden, wobei bei einer Kombination der Merkmale von Tachograph und Mauterfassungsgerät von einer Universal Onboard Unit gesprochen wird. Hierdurch wird eine technische Erweiterung dieser Geräte erreicht.

Ausführungsbeispiele der Erfindung sind in den Zeichnungen dargestellt und werden nachfolgend anhand der Figuren 1 bis 7 erläutert. Es zeigen:
- Fig. 1: eine perspektivische rückseitige Ansicht eines Gehäuses eines Bordinformationssystems mit einer Ausnehmung,
- Fig. 2: eine Mobilfunkantenne zur Integration in ein Bordinformationssystem,
- Fig. 3: eine Fig. 1 entsprechende Darstellung des Gehäuses des Bordinformationssystems mit integrierter Mobilfunkantenne,
- Fig. 4: einen Schnitt durch das Gehäuse parallel zu einer Rückseite des Bordinformationssystems mit integrierter Mobilfunkantenne,
- Fig. 5: einen weiteren Querschnitt durch das Gehäuse senkrecht zu der Rückseite des Bordinformationssystems mit integrierter Mobilfunkantenne,
- Fig. 6: eine Fig. 1 entsprechende Darstellung des Gehäuses des Bordinformationssystems mit integrierter Mobilfunkantenne sowie Abdeckung für die Mobilfunkantenne und
- Fig. 7: eine perspektivische Vorderansicht des Gehäuses des Bordinformationssystems mit integrierter Mobilfunkantenne und Abdeckung.

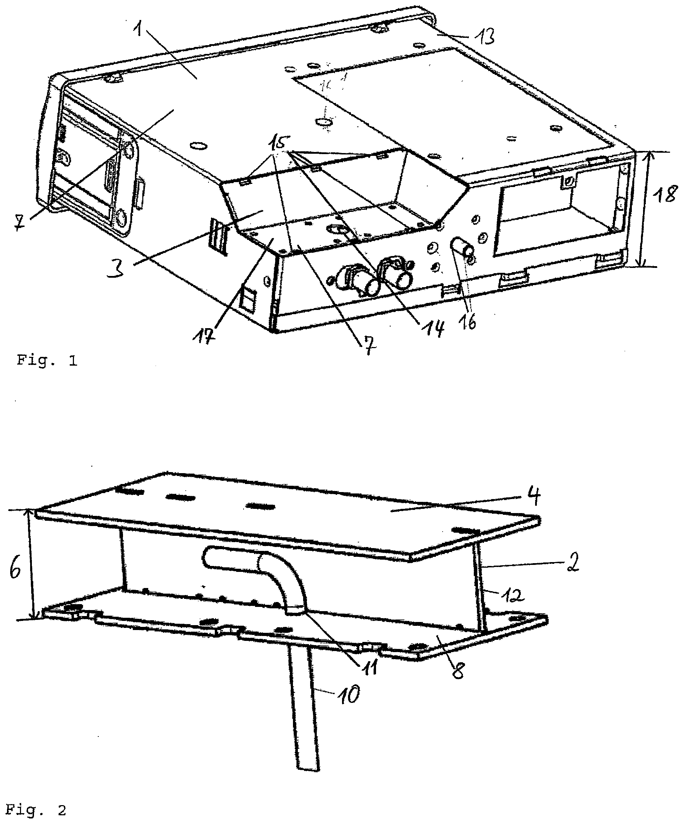

Fig. 1 stellt ein Gehäuse 1 eines erfindungsgemäßen Bordinformationssystems in perspektivischer Rückansicht dar, d. h. die gezeigte Seite des Gehäuses 1 ist nach einem Einbau einem Fahrzeuginnenraum abgewandt bzw. durch einen Einbauschacht überdeckt. Das Bordinformationssystem ist im dargestellten Fall ein digitaler Tachograph, es kann allerdings auch als konventioneller Tachograph, Mauterfassungsgerät oder als Universal Onboard Unit ausgestaltet sein. Der Einbau kann in verschiedene Fahrzeugtypen erfolgen, sowohl in Personenkraftwagen als auch in Lastkraftwagen.

Die Abmessungen des Gehäuses 1 sind entsprechend einer Norm ISO 7736 oder DIN 75490 gewählt, sodass ein Einbau in Schächte, beispielsweise Radioschächte in der Instrumententafel eines Fahrzeugs, bei einer Vielzahl von Modellen unterschiedlicher Hersteller problemlos möglich ist. Das Gehäuse 1 besteht aus einem leitfähigen Material, im vorliegenden Fall einem Metall, und weist eine Ausnehmung 3 auf einer Oberseite 13 einer Außenseite 7 auf. Alternativ kann das Gehäuse 1 auch aus einem elektrisch nicht leitfähigen Material bestehen. Eine Gehäusehöhe 18 beträgt im dargestellten Ausführungsbeispiel 50 mm.

Im Bereich der Ausnehmung 3 weist das Gehäuse 1 eine zusammenhängende Oberfläche auf, die einteilig mit dem Gehäuse 1 verbunden ist. Die Ausnehmung 3 weist eine zu einer Oberseite 13 des Gehäuses 1 parallel angeordnete Auflagefläche 17 für einen Fuß einer Mobilfunkantenne auf, welche mit der Oberseite 13 des Gehäuses 1 durch abgeschrägte Flanken verbunden ist. Die Ausnehmung 3 weist abgeschrägte Kanten auf, um einerseits einen ausreichenden Abstand zwischen einer Mobilfunkantenne und dem Gehäuse 1 zu gewährleisten. Andererseits wird durch die abgeschrägten Kanten im Inneren des Gehäuses 1 noch Platz zum Einbau weiterer Module oder Bauteile zur Verfügung gestellt. Die Flanken verlaufen im gezeigten Ausführungsbeispiel in einem Winkel von 45°, es sind allerdings auch andere Winkel, vorzugsweise im Bereich zwischen 30° und 60°, möglich. Im dargestellten Fall liegt die Ausnehmung 3 am Rand des Gehäuses 1, allerdings kann die Ausnehmung 3 auch mittig im Gehäuse 1 liegen. Die Ausnehmung 3 kann auch quaderförmig sein, also keine abgeschrägten Flanken aufweisen bzw. alternativ auch an mindestens einer Seite eine abgeschrägte Flanke aufweisen und an mindestens einer anderen Seite eine rechtwinklige Flanke. Auch ein einzelner Ausschnitt aus dem Gehäuse 1 in Form eines Lochs ist als Ausnehmung 3 von der Erfindung umfasst, wobei in diesem Fall eine Mobilfunkantenne in der entstehenden Vertiefung platziert wird.

Das Bordinformationssystem umfasst außerdem ein Mobilfunk-Modul, welches in Fig. 1 nicht dargestellt ist, da es sich im Inneren des Gehäuses 1 befindet und von diesem verdeckt wird. Die Ausnehmung 3 ist aus einer Oberseite 13 des Gehäuses 1 ausgenommen, kann allerdings ebenso auf einer in Fig. 1 nicht sichtbaren Unterseite liegen. Die Oberfläche der Ausnehmung 3 ist als geschlossene Fläche ausgebildet, wobei die Auflagefläche 17 einer Mobilfunkantenne die gleichen Maße wie ein Fuß einer Mobilfunkantenne aufweist, die Maße können auch größer als ein Antennenfuß sein. Eine Mobilfunkantenne ist auf der nach einem Einbau dem Fahrzeuginnenraum abgewandten Seite angebracht, um an der Vorderseite den Einbau von Anzeige- und Kontrollelementen zu ermöglichen, jedoch kann die Ausnehmung 3 für eine Mobilfunkantenne an jeder Position des Gehäuses 1 erfolgen, also auch an einer dem Fahrzeuginnenraum zugewandten Seite.

Die Ausnehmung 3 enthält eine Durchführung 14, durch die eine in der Ausnehmung 3 platzierte Mobilfunkantenne mit im Inneren des Gehäuses 1 integrierten Bauteilen verbunden werden kann. Außerdem weist die Ausnehmung 3 mindestens eine Aufnahme 15 zur Verbindung einer Abdeckung 9 an der Ausnehmung 3 auf. Im in Fig. 1 dargestellten Ausführungsbeispiel sind für eine bessere Befestigung mehrere Aufnahmen 15 enthalten. Die Aufnahmen 15 sind im dargestellten Fall für die Aufnahme von Rastzungen einer Abdeckung 9 konzipiert, es kann allerdings auch eine Verschraubung zur Befestigung der Abdeckung 9 mit dem Gehäuse 1 vorgesehen sein. Die Aufnahmen 15 weisen einen Abstand von maximal 50 mm auf, um lange Kanten zu vermeiden, da diese Kanten als Antennen wirken und somit den Empfang der Mobilfunkantenne 2 stören können.

Neben den bereits erwähnten Aufnahmen 15 und der Durchführung 14 weist das Gehäuse 1 mindestens einen Ausbruch 16 zur Befestigung des Gehäuses 1 an einer Befestigungsvorrichtung des Fahrzeuginnenraums, beispielsweise durch Verschraubung eines Gewindebolzens, oder zur elektrischen Kontaktierung mit anderen im Fahrzeuginnenraum positionierten Bauelementen auf.

In Fig. 2 ist ein Ausführungsbeispiel einer Mobilfunkantenne 2 dargestellt. Gleiche Elemente sind in dieser Figur wie auch in den folgenden Figuren jeweils mit gleichen Bezugszeichen versehen. Im in Fig. 2 dargestellten Fall ist die Mobilfunkantenne 2 als PIFA-Antenne, also als "Planar Inverted F-Shaped Antenna" ausgebildet. Hierbei ist eine strahlende Fläche 4 mit einem Fuß 8 elektrisch durch ein Verbindungselement 12, das als Kurzschlussleitung dient, verbunden. Strahlende Fläche 4 und Fuß 8 sind zueinander parallel angeordnet, eine Gesamthöhe 6 ergibt sich als Abstand zwischen einer Oberseite der strahlenden Fläche 4 und einer hier nicht sichtbaren Unterseite des Fußes 8. Die Mobilfunkantenne 2 ist aus einem elektrisch leitfähigen Material, insbesondere einem Metall, gefertigt. Die in die Ausnehmung 3 einsetzbare Mobilfunkantenne kann allerdings auch in einer anderen Bauform realisiert werden, beispielsweise als Patch-Antenne.

Als Anspeiseleitung bzw. zur Verbindung mit dem Mobilfunk-Modul oder anderen Modulen, die im Gehäuse 1 platziert sein können, umfasst die Mobilfunkantenne 2 ein Kabel 10, im vorliegenden Fall ein Koaxialkabel, welches durch eine im Fuß 8 der Mobilfunkantenne 2 enthaltene Aussparung 11 geführt wird. Das Kabel 10 kann mit der Mobilfunkantenne 2 verlötet, verschraubt oder an diese geklemmt sein, insbesondere an das Verbindungselement 12 oder die strahlende Fläche 4.

An der Oberfläche der Ausnehmung 3 ist eine der Aussparung 11 entsprechende Durchführung 14 für das Kabel 10 enthalten. Die Aussparung 11 kann wie im dargestellten Fall ein Loch im Fuß 8 sein, allerdings auch eine Aussparung an einem Rand des Fußes 8. Die Aussparung 11 ist in ihrem Durchmesser nur unwesentlich größer als der Durchmesser des Kabels 10 und von kleinerem oder gleich großem Durchmesser wie die Durchführung 14. Ist der Durchmesser der Durchführung 14 größer als der Durchmesser der Aussparung 11, kann beispielsweise ein Antennenstecker zu einem Ende des Kabels 10 durchgesteckt werden. Durch diese Bauform wird die Leistung der Mobilfunkantenne 2 erhöht, während das Kabel 10 die nur unwesentlich größere Aussparung 11 nahezu vollständig füllt und somit keine negative Beeinflussung der Leistung stattfindet, da ein nicht vom Kabel 10 gefüllter Teil der Aussparung 14 vom Fuß 8 abgedeckt wird. Durch diese Bauform wird die Leistung der Mobilfunkantenne 2 erhöht, während das Kabel 10 die nur unwesentlich größere Aussparung 11 nahezu vollständig füllt und somit keine negative Beeinflussung der Leistung stattfindet.

Die Mobilfunkantenne 2 ist zum Empfang verschiedener Mobilfunksignale geeignet, beispielsweise von Signalen nach dem GSM-, dem GPRS-, dem UMTS- oder einem anderen Standard. Die Abmessungen der Mobilfunkantenne 2 sind kleiner oder gleich den Abmessungen der Ausnehmung 3. Hierdurch wird gewährleistet, dass die Mobilfunkantenne 2 nicht aus dem Gehäuse 1 ragt und somit ein Einbau in den Fahrzeuginnenraum leichter vorgenommen werden kann.

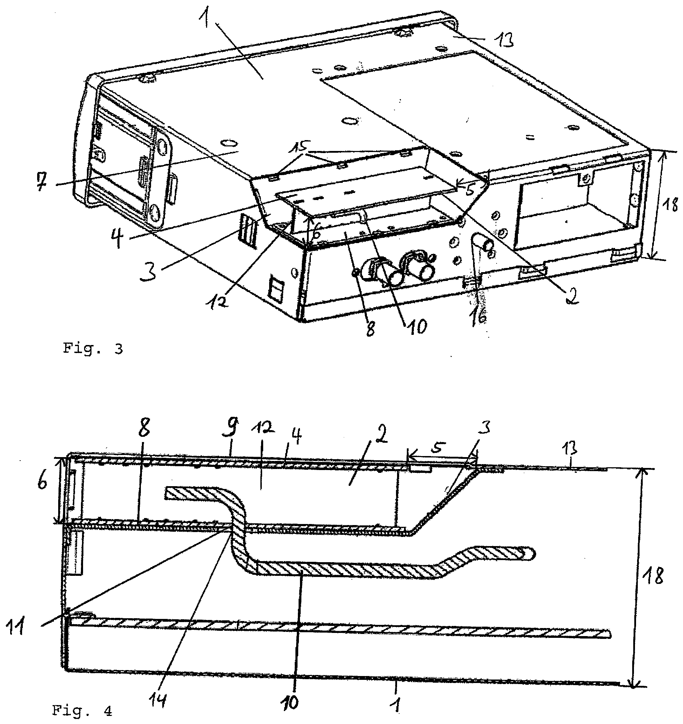

In Fig. 3 ist die in Fig. 2 gezeigte Mobilfunkantenne 2 auf einer Außenseite 7 des in Fig. 1 dargestellten Gehäuses 1 des Bordinformationssystems in der Ausnehmung 3 angebracht. Der Fuß 8 der Mobilfunkantenne 2 ist hierbei flächig mit der Außenseite 7 des Gehäuses 1 verbunden, sodass eine Masseverbindung zwischen dem als Massefläche der Mobilfunkantenne 2 dienenden Fuß 8 und einer Massefläche des Gehäuses 1, die durch die elektrisch leitfähige Außenseite 7 des Gehäuses 1 gegeben ist, sichergestellt ist. Das Kabel 10 ist durch die Aussparung 11 und die Durchführung 14 ins Innere des Gehäuses 1 geführt. Die Verbindung der Antenne kann über Vernieten, Verlöten, Verschrauben oder Verkleben erfolgen. Die Abmessungen der Mobilfunkantenne 2 sind kleiner bzw. gleich den Abmessungen der Ausnehmung 3. Somit kann auch mit integrierter Mobilfunkantenne 2 das Gehäuse 1 in einen Schacht mit Abmessungen nach ISO 7736 oder DIN 75490 eingebaut werden.

Die Oberseite der strahlenden Fläche 4 befindet sich auf gleicher Höhe wie die Oberseite 13 des Gehäuses 1 oder geringfügig unterhalb der Oberseite 13. Die strahlende Fläche 4 der Mobilfunkantenne 2 ist in einem Abstand 5 von der Oberfläche der Ausnehmung 3 angebracht. Der Abstand 5 beträgt im dargestellten Fall etwa 100 % der Gesamthöhe 6 der Mobilfunkantenne 2, sodass eine Abstrahlung nicht behindert wird und ist sowohl auf der Längs- als auch auf der Querseite der strahlenden Fläche 4 gleich groß. Der Abstand 5 muss jedoch auch nicht an allen Seiten gleich groß sein, sofern jeweils der genannte Mindestabstand nicht unterschritten wird. Somit wird eine höhere Variabilität bezüglich der Integration weiterer Module in den Innenraum des Gehäuses 1 erreicht.

Der Fuß 8 deckt mit seiner Fläche die Durchführung 14 im Gehäuse 1 ab, sodass die Leistung der Mobilfunkantenne 2 durch einen größeren Durchmesser der Durchführung 14 als dem Durchmesser der Aussparung 11 nicht verschlechtert wird.

Auch bei anderen Formen der Ausnehmung 3, beispielsweise einem Ausschnitt aus dem Gehäuse 1, ist wesentlich, dass die strahlende Fläche 4 der Mobilfunkantenne 2 einerseits nicht über die Abmessungen des Gehäuses 1 hinausragt, um einen einfachen Einbau zu gewährleisten, andererseits aber einen ausreichenden Abstand 5 zu einem elektrisch leitfähigen Teil des Gehäuses 1 sowie eine Positionierung möglichst nahe an der Außenseite 7 des Gehäuses 1 aufweist. Somit wird in kompakter Bauweise eine entsprechend gute Sende- und Empfangscharakteristik der Mobilfunkantenne 2 erreicht. Diese Voraussetzungen sollten unabhängig von der Bauform der Mobilfunkantenne 2 verwirklicht sein, also muss beispielsweise bei Verwendung einer Patch-Antenne deren strahlende Fläche 4 ebenfalls einen Abstand 5 zu elektrisch leitfähigen Teilen des Gehäuses 1 aufweisen und einen bündigen Abschluss mit dem Gehäuse 1 erlauben.

In Fig. 4 ist ein Schnitt durch das Gehäuse 1 parallel zur Rückseite des Gehäuses 1 dargestellt. Das Kabel 10 ist mit der Mobilfunkantenne 2 verbunden und wird durch eine Aussparung 11 im Fuß 8 der Mobilfunkantenne 2 und die Durchführung 14 in das Innere des Gehäuses 1 geführt. Die Ausnehmung 3 weist abgeschrägte Flanken auf, um einen Abstand 5, der, wie bereits erläutert, etwa 100 % der Gesamthöhe 6 der Mobilfunkantenne 2 beträgt, zwischen der strahlenden Fläche 4 und dem Gehäuse 1 zu gewährleisten. Der Fuß 8 der Mobilfunkantenne 2 ist bündig an einer Oberfläche der Ausnehmung 3 befestigt. Die Abmessungen des Fußes 8 und der Auflagefläche des Fußes 8 auf der Ausnehmung 3 weisen im Wesentlichen die gleiche Größe auf. Hierdurch kann eine gute Kontaktierung bei geringem Platzbedarf realisiert werden.

Zusätzlich ist die Mobilfunkantenne 2 durch eine Abdeckung 9 vor mechanischer Beschädigung geschützt. Die Abdeckung 9 weist Rastzungen auf, die in die Aufnahmen 15 eingebracht werden und darin einrasten. Hiermit kann eine zuverlässige Verbindung hergestellt werden, wobei die Abdeckung 9 auch einfach gelöst werden kann. Alternativ kann auch eine Befestigung der Abdeckung 9 durch Schrauben, eine magnetische Verbindung, Verkleben, Vernieten oder andere Verbindungsmechanismen vorgesehen sein. Auch das restliche Gehäuse 1 kann durch eine Abdeckung vor mechanischer Beschädigung geschützt werden.

Die Abdeckung 9 ist aus einem dielektrischen, also nicht oder nur schwach elektrisch leitfähigem Material, im vorliegenden Fall aus Kunststoff, um eine negative Beeinflussung der Sende- und Empfangscharakteristik der Mobilfunkantenne 2 zu vermeiden. Die Abdeckung 9 berührt im dargestellten Ausführungsbeispiel die strahlende Fläche 4 der Mobilfunkantenne 2, allerdings ist auch denkbar, einen Zwischenraum zwischen beiden Teilen zuzulassen. Die Abdeckung 9 führt die Oberseite 13 des Gehäuses 1 bündig fort, sodass eine ebene Oberfläche entsteht, die Abdeckung 9 kann aber auch unterhalb der Oberseite 13 des Gehäuses 1 liegen, sodass eine Stufe oder Schräge zwischen Abdeckung 9 und Oberseite 13 entsteht. Hierdurch ergibt sich ein im Wesentlichen quaderförmiges Gehäuse 1 mit Abdeckung 9, welches einfach ein- und ausbaubar ist.

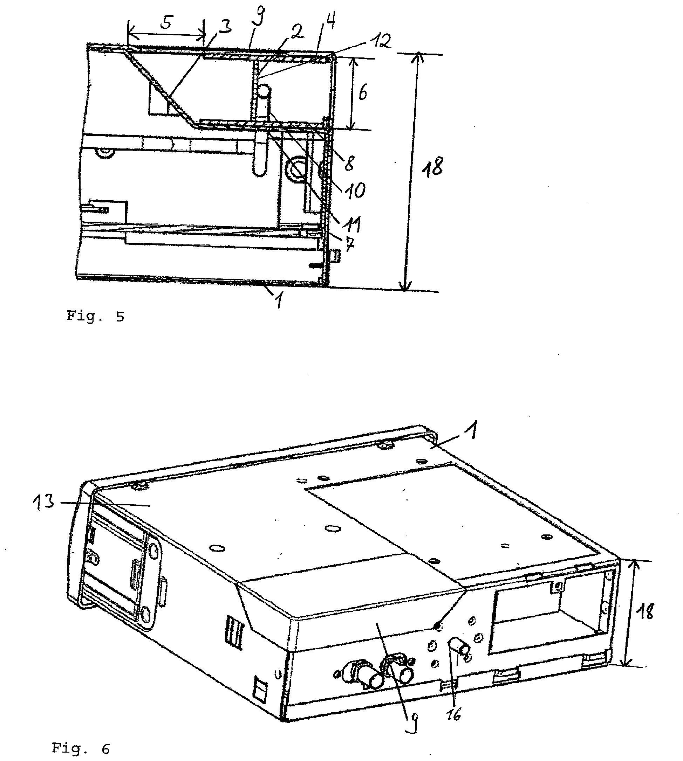

Fig. 5 zeigt einen Schnitt durch das Gehäuse 1 senkrecht zur Rückseite des Gehäuses 1. Auch in dieser Figur beträgt der Abstand 5 zwischen strahlender Fläche 4 und Gehäuse 1, insbesondere einem elektrisch leitfähigen Bestandteil des Gehäuses 1, etwa 100 % der Gesamthöhe 6 der Mobilfunkantenne 2.

Das Kabel 10 befindet sich in unmittelbarem Kontakt mit einem Verbindungselement 12 zwischen strahlender Fläche 4 und Fuß 8 und wird durch die an diesem Verbindungselement 12 befindliche Aussparung 11 in den Innenraum des Gehäuses 1 geführt. Die Abdeckung 9 überdeckt wiederum die gesamte Ausnehmung 3 inklusive der Mobilfunkantenne 2 und sorgt so für einen bündigen Anschluss an die Außenseite 7 des Gehäuses 1.

In Fig. 6 ist aus gleicher Perspektive wie in Fig. 1 das Gehäuse 1 des Bordinformationssystems dargestellt. Die Mobilfunkantenne 2 ist nun unter der Abdeckung 9 verborgen. Die Abdeckung 9 bietet einen bündigen Anschluss an die Form des Gehäuses 1, sodass auch mit Abdeckung 9 die Abmessungen passend für einen Einbau in einen Schacht nach ISO 7736 oder DIN 75490 sind. Bei einem Einbau in einen Schacht einer Instrumententafel eines Fahrzeugs sollte der Abstand zwischen der Mobilfunkantenne 2 und weiteren elektrisch leitfähigen Teilen anderer Einbaugeräte, die die Mobilfunkantenne 2 überdecken können (z. B. ein Radio), mindestens 20 mm betragen, um in ausreichender Stärke Signale empfangen und senden zu können.

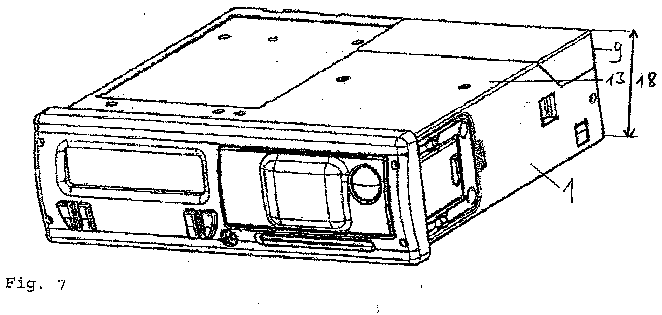

Fig. 7 zeigt die Vorderseite, also die nach einem Einbau einem Fahrzeuginnenraum zugewandte Seite des in Fig. 6 in rückseitiger Ansicht dargestellten Gehäuses 1 des Bordinformationssystems. Mit einem derartigen Gehäuse 1 mit integrierter Mobilfunkantenne 2 eines Bordinformationssystems ist es möglich, ohne den Anbau von Zusatzmodulen oder externen Antennen ein kompaktes und zum Einbau in verschiedene Fahrzeugtypen geeignetes Gehäuse 1 zu erhalten. Weiter kann ein Austausch durch die Normmaße einfach und schnell durchgeführt werden.

## Patentansprüche

1. Bordinformationssystem, das ein digitaler Tachograph oder ein Mauterfassungsgerät oder eine die Funktionen von Tachographen und Mauterfassungsgeräten kombinierende Universal Onboard Unit ist, zur Erfassung mindestens einer fahrzeugrelevanten Größe, umfassend ein in einen Fahrzeuginnenraum einbaubares Gehäuse (1), ein Mobilfunk-Modul und eine Mobilfunkantenne (2), **dadurch gekennzeichnet, dass** die Mobilfunkantenne (2) in einer Ausnehmung (3) des Gehäuses (1) platziert ist und eine strahlende Fläche (4) der Mobilfunkantenne (2) derart von dem Gehäuse (1) beabstandet ist, dass ein elektrisch leitender Bestandteil des Gehäuses (1) und die strahlende Fläche (4) der Mobilfunkantenne (2) einen Abstand (5) von mindestens 50 % einer Gesamthöhe (6) der Mobilfunkantenne (2) aufweisen, und dass die Mobilfunkantenne (2) auf einer nach einem Einbau einem Fahrzeuginnenraum abgewandten Seite des Gehäuses (1) angebracht ist und dass die Mobilfunkantenne (2) eine PIFA-Antenne ist und dass die Mobilfunkantenne (2) auf einer Außenseite (7) des Gehäuses (1) angebracht ist und dass ein Fuß (8) der Mobilfunkantenne (2) mit einem elektrisch leitfähigen Teil des Gehäuses (1) verbunden ist.

2. Bordinformationssystem nach Anspruch 1, **dadurch gekennzeichnet, dass** der elektrisch leitende Bestandteil des Gehäuses (1) und die strahlende Fläche (4) der Mobilfunkantenne (2) einen Abstand (5) von mindestens 100 % einer Gesamthöhe (6) der Mobilfunkantenne (2) aufweisen.

3. Bordinformationssystem nach einem der vorhergehenden Ansprüche, **dadurch gekennzeichnet,**
**dass** die Mobilfunkantenne (2) direkt mit der Außenseite (7) des Gehäuses (1) verbunden ist.

4. Bordinformationssystem nach einem der vorhergehenden Ansprüche, **dadurch gekennzeichnet,**
**dass** die Mobilfunkantenne (2) Abmessungen aufweist, die kleiner oder gleich Abmessungen der Ausnehmung (3) sind.

5. Bordinformationssystem nach einem der vorhergehenden Ansprüche, **dadurch gekennzeichnet,**
**dass** das Gehäuse (1), vorzugsweise die Ausnehmung (3), eine Abdeckung (9) aus einem dielektrischen Material, vorzugsweise Kunststoff, aufweist.

6. Bordinformationssystem nach einem der vorhergehenden Ansprüche, **dadurch gekennzeichnet,**
**dass** das Gehäuse (1) in einen Schacht mit Abmessungen entsprechend einer Norm ISO 7736 einbaubar ist.

7. Bordinformationssystem nach einem der vorhergehenden Ansprüche, **dadurch gekennzeichnet,**
**dass** die Mobilfunkantenne (2) mit einem Kabel (10) verbunden ist, vorzugsweise einem Koaxialkabel, und das Kabel (10) durch eine im Fuß (8) der Mobilfunkantenne (2) befindliche Aussparung (11) in das Gehäuse (1) geführt wird, wobei der Fuß (8) eine nicht vom Kabel (10) gefüllte Fläche der Aussparung (11) abdeckt.

8. Verwendung eines Bordinformationssystems nach einem der vorhergehenden Ansprüche in einem Fahrzeug als Tachograph, vorzugsweise als digitaler Tachograph, und/oder Mauterfassungsgerät.

## Claims

1. Onboard information system, which is a digital tachograph or a toll collection appliance or a universal onboard unit combining the functions of tachographs and toll collection appliances, for capturing at least one vehicle-related variable, comprising a housing (1) which can be installed in a vehicle interior, a mobile radio module and a mobile radio antenna (2), **characterized in that** the mobile radio antenna (2) is positioned in a recess (3) in the housing (1) and a radiating plane (4) of the mobile radio antenna (2) is at a distance from the housing (1) such that an electrically conductive part of the housing (1) and the radiating plane (4) of the mobile radio antenna (2) are at a distance (5) of at least 50% of an overall height (6) of the mobile radio antenna (2), and **in that** the mobile radio antenna (2) is fitted on a side of the housing (1) which is remote from a vehicle interior following installation, and **in that** the mobile radio antenna (2) is a PIFA antenna, and **in that** the mobile radio antenna (2) is fitted on an outer side (7) of the housing (1), and **in that** a base (8) of the mobile radio antenna (2) is connected to an electrically conductive portion of the housing (1).

2. Onboard information system according to Claim 1, **characterized in that** the electrically conductive part of the housing (1) and the radiating plane (4) of the mobile radio antenna (2) are at a distance (5) of at least 100% of an overall height (6) of the mobile radio antenna (2).

3. Onboard information system according to either of the preceding claims, **characterized in that** the mobile radio antenna (2) is directly connected to the outer side (7) of the housing (1).

4. Onboard information system according to one of the preceding claims, **characterized in that** the mobile radio antenna (2) has dimensions which are less than or equal to dimensions of the recess (3).

5. Onboard information system according to one of the preceding claims, **characterized in that** the housing (1), preferably the recess (3), has a cover (9) comprising a dielectric material, preferably plastic.

6. Onboard information system according to one of the preceding claims, **characterized in that** the housing (1) can be installed in a pit having dimensions according to an ISO 7736 standard.

7. Onboard information system according to one of the preceding claims, **characterized in that** the mobile radio antenna (2) is connected to a cable (10), preferably a coaxial cable, and the cable (10) is guided through a cutout (11) situated in the base (8) of the mobile radio antenna (2) into the housing (1), wherein the base (8) covers a surface area of the cutout (11) which is not filled by the cable (10).

8. Use of an onboard information system according to one of the preceding claims in a vehicle as a tachograph, preferably as a digital tachograph, and/or a toll collection appliance.

## Revendications

1. Système d'information de bord, qui est un tachygraphe numérique ou un appareil de collecte de péage ou encore une unité embarquée universelle qui combine les fonctions de tachygraphes et d'appareils de collecte de péage, destiné à acquérir au moins une grandeur pertinente du véhicule, comprenant un boîtier (1) qui peut être installé dans un habitacle de véhicule, un module de radiocommunication mobile et une antenne de radiocommunication mobile (2), **caractérisé en ce que** l'antenne de radiocommunication mobile (2) est placée dans une cavité (3) du boîtier (1) et une surface rayonnante (4) de l'antenne de radiocommunication mobile (2) est espacée du boîtier (1) de telle sorte qu'un élément constitutif électriquement conducteur du boîtier (1) et la surface rayonnante (4) de l'antenne de radiocommunication mobile (2) présentent un écart (5) égal à au moins 50 % d'une hauteur totale (6) de l'antenne de radiocommunication mobile (2), et **en ce que** l'antenne de radiocommunication mobile (2) est montée sur un côté du boîtier (1) qui est à l'opposé de l'habitacle du véhicule après l'installation et **en ce que** l'antenne de radiocommunication mobile (2) est une antenne PIFA et **en ce que** l'antenne de radiocommunication mobile (2) est montée sur un côté extérieur (7) du boîtier (1) et **en ce qu'**un pied (8) de l'antenne de radiocommunication mobile (2) est relié à une partie électriquement conductrice du boîtier (1).

2. Système d'information de bord selon la revendication 1, **caractérisé en ce que** l'élément constitutif électriquement conducteur du boîtier (1) et la surface rayonnante de l'antenne de radiocommunication mobile (2) présentent un écart (5) égal à au moins 100 % d'une hauteur totale (6) de l'antenne de radiocommunication mobile (2).

3. Système d'information de bord selon l'une des revendications précédentes, **caractérisé en ce que** l'antenne de radiocommunication mobile (2) est reliée directement au côté extérieur (7) du boîtier (1).

4. Système d'information de bord selon l'une des revendications précédentes, **caractérisé en ce que** l'antenne de radiocommunication mobile (2) possède des dimensions qui sont inférieures ou égales aux dimensions de la cavité (3).

5. Système d'information de bord selon l'une des revendications précédentes, **caractérisé en ce que** le boîtier (1), de préférence la cavité (3) possède un couvercle (9) en un matériau diélectrique, de préférence une matière plastique.

6. Système d'information de bord selon l'une des revendications précédentes, **caractérisé en ce que** le boîtier (1) peut être installé dans un compartiment ayant les dimensions conformément à la norme ISO 7736.

7. Système d'information de bord selon l'une des revendications précédentes, **caractérisé en ce que** l'antenne de radiocommunication mobile (2) est reliée à un câble (10), de préférence un câble coaxial, et le câble (10) est acheminé dans le boîtier (1) à travers un évidement (11) qui se trouve dans le pied (8) de l'antenne de radiocommunication mobile (2), le pied (8) recouvrant une surface de l'évidement (11) qui n'est pas remplie par le câble (10).

8. Utilisation d'un système d'information de bord selon l'une des revendications précédentes dans un véhicule en tant que tachygraphe, de préférence en tant que tachygraphe numérique, et/ou appareil de collecte de péage.
